# EUROPEAN PATENT APPLICATION

(11) **EP 3 911 090 A1**
(43) Date of publication of application: **17.11.2021**
(21) Application number: 19909512.6
(22) Date of filing: 11.01.2019
(51) Int. Cl.: H04W 72/12, H04W 16/28, H04W 28/16

(54) **USER TERMINAL AND WIRELESS COMMUNICATION METHOD**

(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); HOU, Xiaolin, Beijing 100190 (CN)
(74) Representative: Hoffmann Eitle
(86) International application number: PCT/JP2019/000790
(87) International publication number: WO 2020/144868

(57) **Abstract**

In order to appropriately perform communication even when the communication is performed by using a plurality of transmission points, an aspect of a user terminal according to the present disclosure includes: a receiving section that receives downlink shared channels transmitted from a plurality of transmission/reception points; and a control section that performs control to report rank indicators corresponding to the downlink shared channels or the transmission/reception points.

## Description

### Technical Field

The present disclosure relates to a user terminal and a radio communication method in next-generation mobile communication systems.

### Background Art

In Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G))," "5G+ (plus)," "New Radio (NR)," "3GPP Rel. 15 (or later versions)," and so on) are also under study.

In existing LTE systems (for example, LTE Rel. 8 to Rel. 13), a user terminal (User Equipment (UE)) controls reception of a downlink shared channel (for example, a Physical Downlink Shared Channel (PDSCH)), based on downlink control information (also referred to as DCI, DL assignment, or the like) from a base station. The UE controls transmission of an uplink shared channel (for example, a Physical Uplink Shared Channel (PUSCH)), based on DCI (also referred to as UL grant or the like).

In the existing LTE systems, a Multi Input Multi Output (MIMO) system has been proposed as a radio communication technology for enhancing a data rate (spectral efficiency) through transmission and reception of data with a plurality of antennas.

For example, in precoding of downlink MIMO transmission, the UE measures a channel variation amount by using a received signal from each antenna, and based on the measured channel variation amount, selects a Precoding Matrix Indicator (PMI) and a Rank Indicator (RI) according to a phase and amplitude control amount (precoding weight) having maximum throughput (or received SINR (Signal to Interference and Noise Ratio)) obtained after synthesizing transmission data from each transmit antenna of the base station. Then, the selected PMI and RI are fed back to the base station in the uplink together with a Channel Quality Indicator (CQI) indicating channel quality information. The base station performs precoding on the transmission data, based on the PMI and the RI fed back from the UE, and then performs information transmission from each antenna.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR, 5G, 5G+, or Rel. 16 or later versions), a scheme in which communication is performed by using beam forming (BF) has been under study. In order to enhance communication quality using BF, a scheme in which at least one of transmission and reception of signals is controlled in consideration of a relationship of quasi-co-location (QCL) (QCL relationship) between a plurality of signals has been under study.

In the future radio communication systems, it is also assumed that a DL signal (for example, the PDSCH) being non-coherent (non-coherent transmission) is transmitted from a plurality of transmission/reception points (or base stations or panels).

It is also assumed that a maximum value of the number of layers that can be used for transmission and reception is different among UEs. When data (for example, the PDSCH) is transmitted from each transmission/reception point (TRP), the base station needs to perform control so that the number of layers used for PDSCH transmission is equal to or less than a maximum number of layers supported by the UE.

How to control the number of layers of the PDSCH transmitted from each of a plurality of TRPs presents a problem, but a specific control method has not yet been fully studied.

The present disclosure is made in the light of such circumstances, and has an object to provide a user terminal and a radio communication method that enable appropriate communication even when the communication is performed by using a plurality of transmission/reception points.

### Solution to Problem

A user terminal according to an aspect of the present disclosure includes a receiving section that receives downlink shared channels transmitted from a plurality of transmission/reception points, and a control section that performs control to report rank indicators corresponding to the downlink shared channels or the transmission/reception points. Advantageous Effects of Invention

According to an aspect of the present disclosure, communication can be appropriately performed even when the communication is performed by using a plurality of transmission/reception points.

### Brief Description of Drawings

FIG. 1A and FIG. 1B are each a diagram to show an example of a case in which a PDSCH is transmitted from a plurality of transmission/reception points;
FIG. 2A to FIG. 2C are each a diagram to show an example of reporting of RIs from a UE;
FIG. 3 is a diagram to show an example of a configuration of a maximum value of RIs for the UE;
FIG. 4 is a diagram to show another example of reporting of RIs from the UE;
FIG. 5 is a diagram to show an example of a case in which data is discarded in a case of exceeding a given number of layers;
FIG. 6 is a diagram to show an example of a schematic structure of a radio communication system according to one embodiment;
FIG. 7 is a diagram to show an example of a structure of a base station according to one embodiment;
FIG. 8 is a diagram to show an example of a structure of a user terminal according to one embodiment; and
FIG. 9 is a diagram to show an example of a hardware structure of the base station and the user terminal according to one embodiment.

### Description of Embodiments

In future radio communication systems (for example, Rel. 16 or later versions), a scheme in which non-coherent DL (for example, PDSCH) transmission is performed from each of a plurality of transmission/reception points has been under study. The transmission performed with DL signals (or DL channels) being non-coherent from the plurality of transmission/reception points in cooperation may be referred to as NCJT (Non-Coherent Joint Transmission). In this specification, the transmission/reception point (TRP) may be interpreted as a transmission point, a reception point, a panel, a cell, or a DMRS port group.

It is also assumed that scheduling of a non-coherent PDSCH transmitted from each of the plurality of transmission/reception points is controlled by using one or more pieces of DCI. As an example, in order to schedule the PDSCH transmitted from the plurality of transmission/reception points, a plurality of downlink control channels (or pieces of DCI) are used.

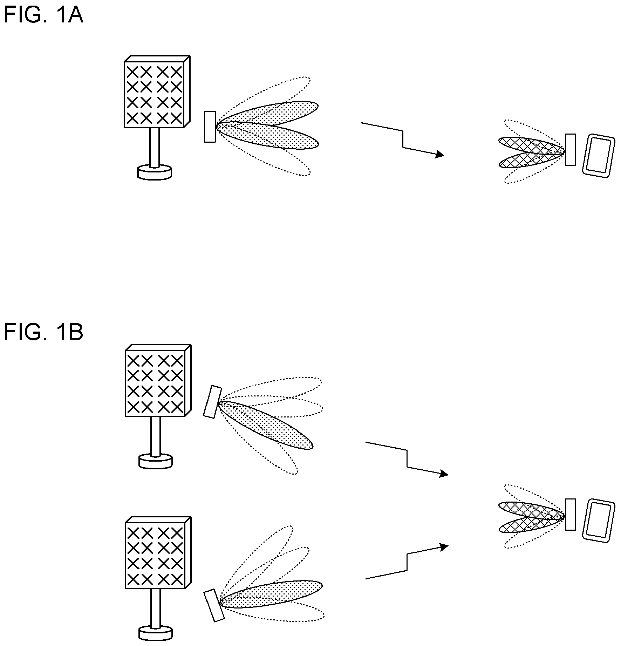

FIG. 1A shows a case in which the PDSCH (for example, the PDSCH using NCJT) is transmitted from a plurality of panels to the UE, and FIG. 1B shows a case in which the PDSCH (for example, the PDSCH using NCJT) is transmitted from a plurality of transmission/reception points (TRP) to the UE. In this case, it is assumed that the base station uses a plurality of layers for the PDSCH transmitted from each TRP in a given time period (for example, the same slot).

It is also assumed that a maximum value of the number of layers that can be used for transmission and reception is different among UEs. When data (for example, the PDSCH) is transmitted from each TRP, the base station needs to perform control so that the number of layers used for PDSCH transmission is equal to or less than a maximum number of layers supported by the UE.

However, when a plurality of TRPs (or base stations) are connected with a backhaul (Non-ideal backhaul) in which a delay cannot be tolerated or the like, it is difficult for each base station to dynamically know information (for example, the number of layers to be applied) related to PDSCH transmission of another TRP or base station. In such a case, when data transmission is performed to the UE by using a plurality of TRPs, an appropriate number of layers (or ranks) may not be able to be configured. As a result, quality or throughput of communication using a plurality of TRPs may be deteriorated.

The inventors of the present invention focused on that there is a case that information of data transmission and reception cannot be dynamically shared between a plurality of base stations (or TRPs), and as an aspect of the present disclosure, came up with the idea of performing control so that a rank indicator (RI) is reported for each TRP (or PDSCH, DMRS port group, CW, or TB having different QCL).

The present embodiment will be described below in detail with reference to the drawings. The embodiments may be individually used or may be used in combination. Note that the transmission/reception point described below may be interpreted as a panel. Note that the following description will describe the number of layers (or ranks) that is applied to transmission of the DL signal (for example, the PDSCH), but can also be similarly applied to transmission of another signal.

### (First Aspect)

In a first aspect, the number of layers (spatial multiplexing layers) used for PDSCH transmission is controlled by providing a rank indicator (RI) corresponding to each TRP. The following description assumes a case in which the UE communicates with two TRPs. However, the number of TRPs is not limited to two, and may be three or more.

In the following description, the RI corresponding to each TRP may be interpreted as the RI corresponding to each PDSCH, each DMRS port group, each codeword (CW), or each transport block (TB) with different Quasi-Co-Location (QCL).

The UE performs control so as to feed back or report a corresponding RI (also referred to as a separate RI) to each of different TRPs. Presence or absence of report operation of the separate RI may be configured (enabled/disabled) by using higher layer signaling or the like from the base station to the UE. For example, information related to the TRP (or the PDSCH, the DMRS port group, the CW, or the TB) that generates the separate RI may be configured for the UE.

When communication is performed by using TRP #1 and TRP #2, the UE reports each of RI #1 corresponding to TRP #1 and RI #2 corresponding to TRP #2. The UE may transmit each RI by including the RI in uplink control information (for example, channel state information (CSI)).

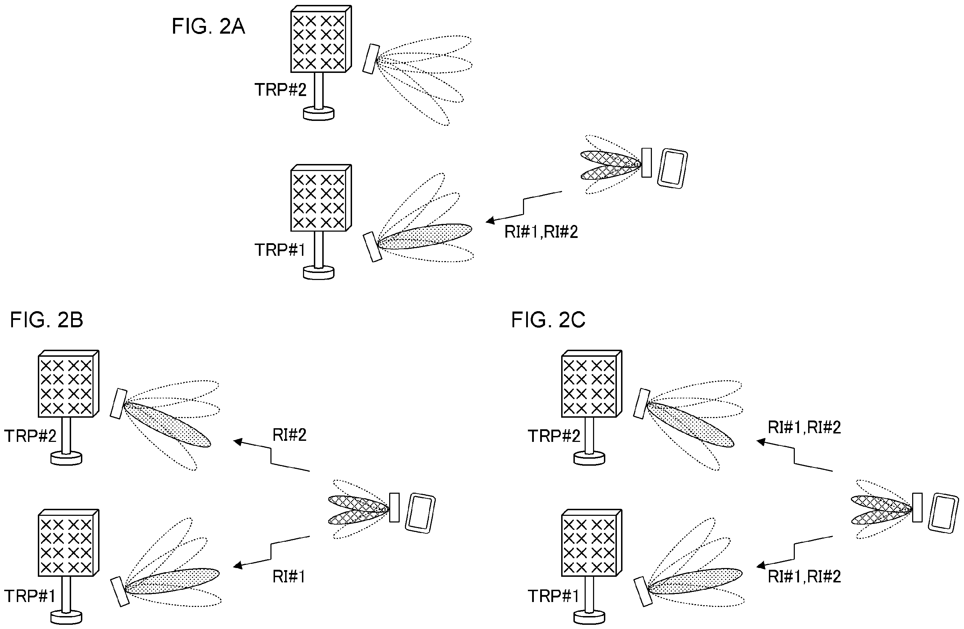

The UE may transmit the RI corresponding to each TRP to a given TRP (or base station), or may transmit the RI corresponding to each TRP to a plurality of TRPs (or base stations) (see FIG. 2A to FIG. 2C). FIG. 2A shows a case in which a plurality of RIs (here, RI #1 and RI #2) are transmitted to a given TRP (here, TRP #1). In this case, information of at least RI #2 may be reported from TRP #1 to TRP #2.

FIG. 2B and FIG. 2C each shows a case in which a plurality of RIs (here, RI #1 and RI #2) are transmitted to a plurality of TRPs (here, TRP #1). FIG. 2B corresponds to a case in which the UE selectively transmits, to each TRP, an RI corresponding to the TRP. For example, the UE transmits RI #1 corresponding to TRP #1 to TRP #1, and transmits RI #2 corresponding to TRP #2 to TRP #2.

FIG. 2C corresponds to a case in which the UE transmits, to each TRP, RIs corresponding to a plurality of TRPs. For example, the UE transmits, to TRP #1, RI #1 corresponding to TRP #1 and RI #2 corresponding to TRP #2, and transmits, to TRP #2 as well, RI #1 corresponding to TRP #1 and RI #2 corresponding to TRP #2.

The UE performs control so that a total value of the RIs (here, RI #1 and RI #2) to be reported to a network (for example, the base station) does not exceed a given value. The given value may be a maximum value (for example, maxNumberMIMO-LayersPDSCH) of the number of layers that can be supported by the UE. For example, when the maximum value of the number of layers that can be supported is 8, the UE configures each RI so that RI #1 + RI #2 ≤ 8 is satisfied.

The UE may assume that the number of layers used for the PDSCH transmitted from each TRP is equal to or less than the RI reported by the UE (or that the UE does not receive the PDSCH using the number of layers exceeding the reported RI).

For example, the UE does not assume reception of the PDSCH using the number of layers exceeding RI #1 in TRP #1. In other words, the UE controls reception operation in TRP #1 by assuming that the PDSCH is transmitted by using the number of layers equal to or less than reported RI #1. In a similar manner, the UE does not assume reception of the PDSCH using the number of layers exceeding RI #2 in TRP #2. In other words, the UE controls reception operation in TRP #2 by assuming that the PDSCH is transmitted by using the number of layers equal to or less than reported RI #2.

In this manner, by limiting PDSCH transmission using the number of layers exceeding the RI reported by the UE, PDSCH transmission can be performed by using the number of layers that can be supported by the UE.

### <Variations>

The UE may determine a value of the RI reported to each TRP, based on the number of TRPs. For example, when communication is performed with N TRPs (or the separate RIs are transmitted to N TRPs), it may be arranged that each of the RIs is equal to or less than (maximum number of layers that can be supported/N). For example, when the RIs corresponding to TRP #1 and TRP #2 are reported (when N = 2), the UE configures each of the RIs (for example, RI #1 and RI #2) so as not to exceed the half of the maximum number of layers that can be supported.

As an example, when the maximum value of the number of layers that can be supported is 8, it is only necessary that each of RI #1 and RI #2 be configured to be equal to or less than 4.

The UE may assume that the number of layers used for the PDSCH transmitted from each TRP is equal to or less than (maximum number of layers that can be supported/N), or that the UE does not receive the PDSCH using the number of layers exceeding (maximum number of layers that can be supported/N).

As an example, when the maximum value of the number of layers that can be supported is 8, it may be assumed that four layers or less are applied to the PDSCH transmitted with each of RI #1 and RI #2.

In this manner, by reporting each of the RIs corresponding to the respective TRPs, the number of layers can be appropriately configured even when a plurality of TRPs (or base stations) are connected with a backhaul (Non-ideal backhaul) in which a delay cannot be tolerated or the like.

### (Second Aspect)

In a second aspect, the number of layers corresponding to each TRP is controlled by separating the layers (spatial multiplexing layers) between a plurality of TRPs.

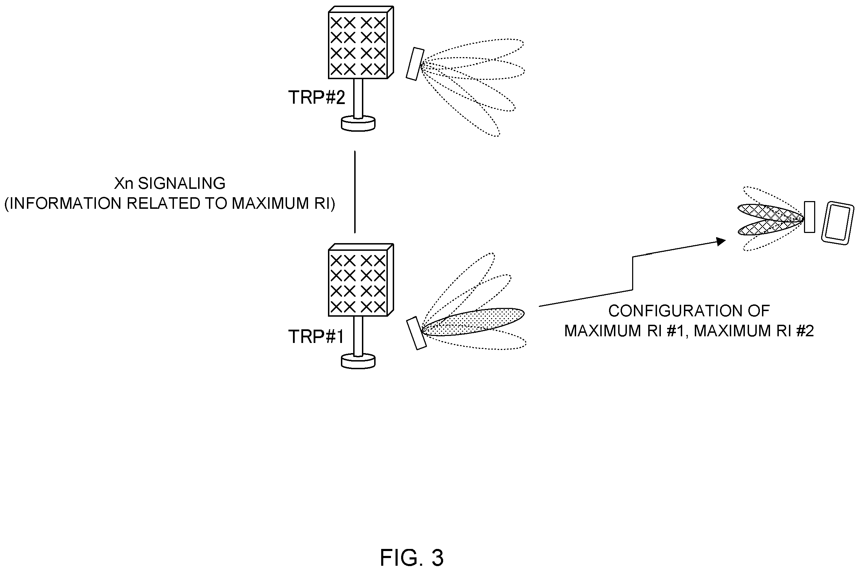

The number of layers corresponding to each TRP may be semistatically (semistatically) configured between a plurality of TRPs in cooperation, and the number of layers corresponding to each TRP may be shared between the TRPs (or base stations). The plurality of TRPs (or base stations) may exchange information (also referred to as split information of layers) related to the layers corresponding to each TRP by using signaling (for example, Xn signaling) between the base stations (inter-gNB) (see FIG. 3).

The number of layers (or ranks) configured for each TRP may be determined based on a given condition. The given condition may be statistics of the number of transmission layers configured in a previous given period (statistic layer transmission situation), or statistics of RI reports reported by the UE in a previous given period (statistic UE's RI reporting).

For example, it is assumed that the UE reports the following RIs as RI #1 and RI #2 corresponding to two TRPs in a previous given period. (RI #1, RI #2): (2, 2), (2, 2), (4, 0), (2, 2), (3, 1), (2, 2)

In this case, (2, 2) is most frequently reported from the UE as (RI #1, RI #2). Thus, a network (for example, the base station) may configure (2, 2) as the number of layers (or the maximum number of layers) for the two TRPs.

Note that the base station may configure the number of layers corresponding to each TRP, based on the most recent or the latest RI reported from the UE, instead of configuring the number of layers corresponding to each TRP, based on statistics (or history) of previous data.

The information exchanged between a plurality of TRPs (or base stations) by using signaling (for example, Xn signaling) between the base stations (inter-gNB) may be at least one of the following pieces of information.
- UE ID
- Maximum number of layers that can be transmitted from a target TRP to the UE
- TRP ID
- Maximum number of layers for a given TRP ID
- Maximum number of layers that can be difference auto by the UE

A network (for example, the base station) may report the information related to the number of layers (or the maximum number of layers) configured for each TRP to the UE by using at least one of higher layer signaling and MAC control information. The UE can appropriately know the number of layers used for PDSCH transmission in each TRP, based on the information reported from the base station.

The base station may report or configure the maximum value of the RI that the UE reports to each TRP (or configures to correspond to each TRP) (see FIG. 3). For example, the maximum value of RI #1 corresponding to TRP #1 (also referred to as maximum RI #1) and the maximum value of RI #2 corresponding to TRP #2 (also referred to as maximum RI #2) may be configured by using at least one of higher layer signaling and MAC control information. The base station configures the values of the RIs so that a total value (for example, RI #1 + RI #2) of the values of the RIs does not exceed a given value (for example, the maximum number of layers that can be supported).

FIG. 3 shows a case in which the maximum values of the RIs are configured from a given TRP (here, TRP #1) to the UE. However, this is not restrictive, and the maximum values may be configured from TRP #2, or may be configured from TRP #1 and TRP #2. The base station may share information regarding the maximum values of each RI configured for the UE between a plurality of TRPs (or base stations) by using signaling (for example, X2 signaling) between the base stations (inter-gNB).

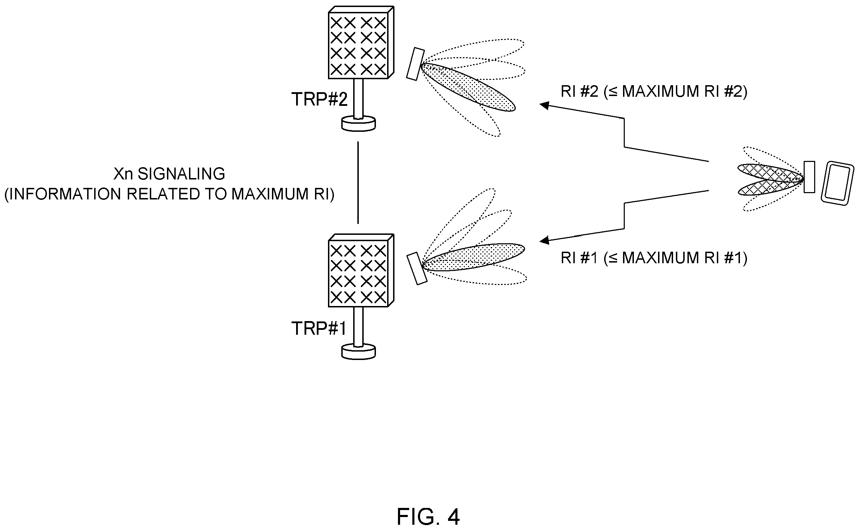

The UE determines and reports each of the values of the RIs corresponding to the respective TRPs so as not to exceed the maximum values of the RIs for the respective TRPs configured from the base station by using higher layer signaling or the like (see FIG. 4). For example, the UE configures the value of RI #1 corresponding to TRP #1 to be equal to or less than Max_RI #1 being the maximum value of RI #1 configured from the base station, and configures the value of RI #2 corresponding to TRP #2 to be equal to or less than Max_RI #2 being the maximum value of RI #2 configured from the base station.

The UE may assume that the number of layers used for the PDSCH transmitted from each TRP is equal to or less than the maximum RI that is configured from the base station (or that the UE does not receive the PDSCH using the number of layers exceeding the configured maximum RI).

For example, the UE controls reception operation by assuming that the PDSCH is transmitted by using the number of layers equal to or less than maximum RI #1 configured from the base station in TRP #1. In a similar manner, the UE controls reception operation by assuming that the PDSCH is transmitted by using the number of layers equal to or less than maximum RI #2 configured from the base station in TRP #2.

In this manner, by limiting PDSCH transmission using the number of layers exceeding the RIs configured in a network (for example, the base station), PDSCH transmission using the number of layers that can be supported by the UE can be performed.

### <Variations>

The base station may configure candidates of sets (or combinations) of maximum values of RIs for the respective TRPs (RIs reported by the UE), for the UE by using higher layer signaling. The candidates of the combinations of the RIs may each be configured in order from the TRP having a small ID to the TRP having a large ID.

Examples (here, Set #1 to Set #4) of the candidates of the combinations of the RIs will be illustrated. Note that the description herein illustrates a case in which the number of TRPs is two (the RI corresponding to TRP #1 and the RI corresponding to TRP #2). However, the number of TRPs is not limited to this.
- Set 1 (Set 1_Max_RI_1, Set 1_Max_RI_2)
- Set 2 (Set 2_Max_RI_1, Set 2_Max_RI_2)
- Set 3 (Set 3_Max_RI_1, Set 3_Max_RI_2)
- Set 4 (Set 4_Max_RI_1, Set 4_Max_RI_2)

The sum of the RIs in each set is configured not to exceed a given value (for example, the number of layers that can be supported by the UE). For example, it is configured so that the sum of Max_RI_1 and Max_RI_2 is equal to or less than a given value in each set.

As an example, when the given value is 8, for example, each set may be configured as follows.
- Set 1 (6, 2)
- Set 2 (4, 4)
- Set 3 (4, 2)
- Set 4 (4, 0)

The base station may configure a plurality of sets for the UE by using higher layer signaling, and then specify activation or deactivation of a given set by using another control information (for example, MAC control information). The UE controls reporting of the RI corresponding to each TRP, based on the maximum value of the RI specified by the given set (for example, one set) activated with the MAC control information.

For example, it is assumed that Set 1 (6, 2) is activated with the MAC control information. In this case, the UE performs reporting of RI #1 so that RI #1 corresponding to TRP #1 is equal to or less than 6. The UE performs reporting of RI #2 so that RI #2 corresponding to TRP #2 is equal to or less than 2.

The UE may assume that the number of layers used for the PDSCH transmitted from each TRP is equal to or less than the maximum value of the RI specified by the set activated from the base station (or that the UE does not receive the PDSCH using the number of layers exceeding the maximum value of the RI specified by the set).

The UE may control reporting of the RI, based on the RI of the already configured set until a new set is activated with the MAC control information, and may change the number of RIs to be reported when a new set is activated.

In this manner, by configuring the RI corresponding to each TRP for the UE, the number of layers can be appropriately configured even when a plurality of TRPs (or base stations) are connected with a backhaul (Non-ideal backhaul) in which a delay cannot be tolerated or the like.

### (Third Aspect)

In a third aspect, when the number of layers used for transmission of data (for example, the PDSCH) from one or more TRPs exceeds a given value, data corresponding to at least a part of the layers is discarded (or deleted or dropped or cancelled), based on a given condition.

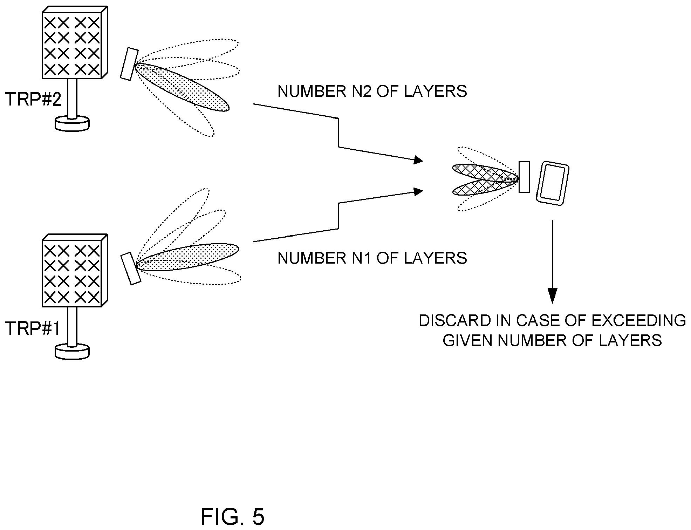

When the PDSCH is transmitted by using the number of layers exceeding a given value (for example, the maximum number of layers that can be supported) from a plurality of TRPs, the UE may discard a part of the layers (or the PDSCH corresponding to the layers) so that the number of layers is equal to or less than the given value (see FIG. 5). Subsequently, the UE may perform decoding of the rest of the PDSCHs (the PDSCHs that have not been discarded).

FIG. 5 shows a case in which the PDSCH is transmitted by using N1 layers from TRP #1, and the PDSCH is transmitted by using N2 layers from TRP #2. For example, when the sum of N1 and N2 exceeds a given value, the UE discards a part of the layers (or the PDSCH corresponding to the layers) so as to be equal to or less than at least the given value.

The PDSCH to be discarded may be selected based on a given condition. For example, regarding the given condition, discarding may be controlled based on any one condition or a plurality of conditions out of the following.
- Condition 1: The PDSCH corresponding to the TRP (or the PDSCH, the DMRS port group, the CW, or the TB) having a relatively small ID is preferentially discarded
- Condition 2: The PDSCH corresponding to the TRP (or the PDSCH, the DMRS port group, the CW, or the TB) having a relatively large ID is preferentially discarded
- Condition 3: The PDSCH scheduled with DCI having a relatively small value of a given field (for example, any one of an MCS, an NDI, an RV, an HPN, a TCI, an antenna port, a layer, a DMRS sequence, and the like) is preferentially discarded
- Condition 4: The PDSCH scheduled with DCI having a relatively large value of a given field (for example, any one of an MCS, an NDI, an RV, an HPN, a TCI, an antenna port, a layer, a DMRS sequence, and the like) is preferentially discarded
- Condition 5: The PDSCH corresponding to a lower TRP out of the TRPs that have performed beam reporting (or beam report) or a TRP that does not perform beam reporting is preferentially discarded

For example, in a case of condition 5, the PDSCH corresponding to a TRP being higher in beam report (for example, corresponding to a TRP having satisfactory L1-RSRP or L1-SINR characteristics) can be received without discarding, and thus reception is made possible without discarding the PDSCH that is transmitted from a specific satisfactory TRP.

The UE may generate and feed back a NACK for the discarded PDSCH.

In this manner, by supporting operation of discarding in a case of exceeding a given number of layers, communication can be appropriately continued even when a plurality of TRPs (or base stations) are connected with a backhaul (Non-ideal backhaul) in which a delay cannot be tolerated or the like.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

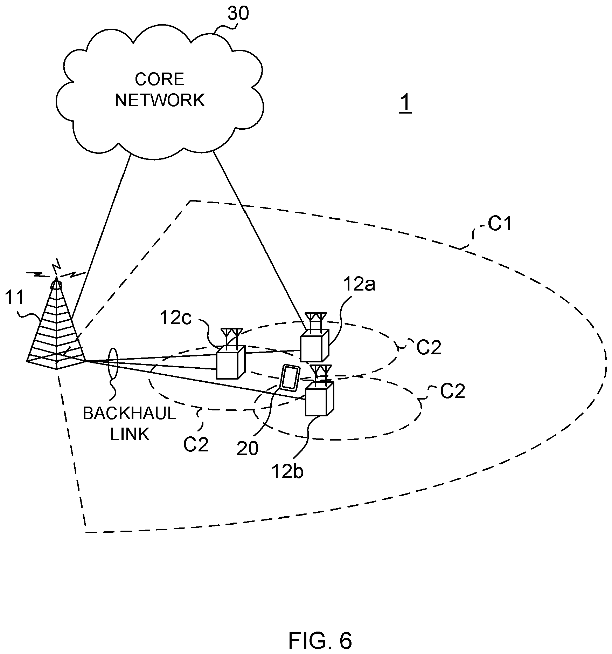

FIG. 6 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

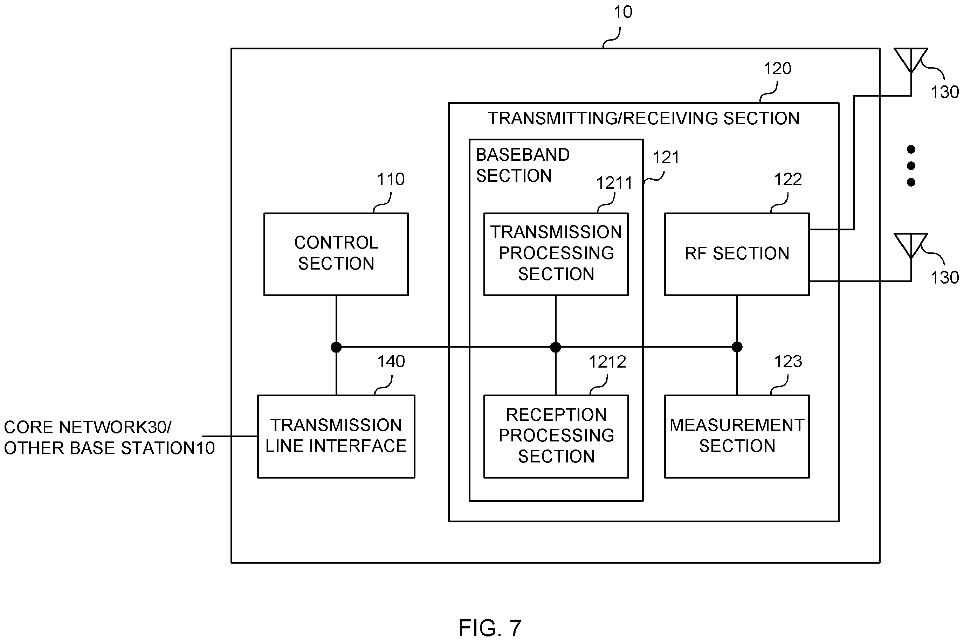

FIG. 7 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 transmits the downlink shared channel from each of a plurality of transmission/reception points. The transmitting/receiving section 120 may control transmission of the downlink shared channel from one TRP, or may control transmission of the downlink shared channel from each of a plurality of TRPs. The transmitting/receiving section 120 receives the RI corresponding to each downlink shared channel (or each TRP, each DMRS port group, each TCI, each QCL, each CW, or each TB).

The transmitting/receiving section 120 transmits information related to the RIs to be reported for each transmission/reception point (for example, information related to the maximum number of RIs) by using at least one of higher layer signaling and MAC control information.

The control section 110 controls reception of the RI corresponding to each downlink shared channel (or each TRP, each DMRS port group, each TCI, each QCL, each CW, or each TB). The control section 110 configures information related to the RI to reporting for each transmission/reception point (for example, information related to the maximum number of RIs).

### (User Terminal)

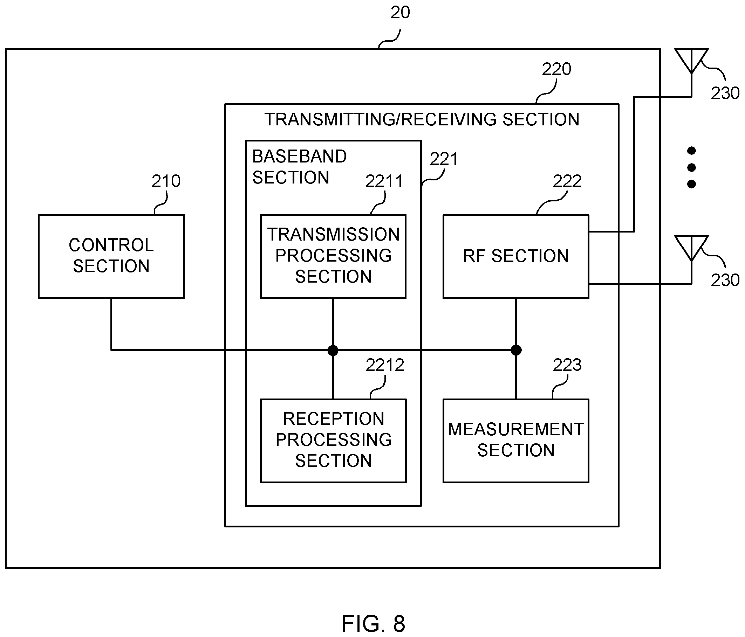

FIG. 8 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 receives the downlink shared channel from each of a plurality of transmission/reception points. The transmitting/receiving section 220 transmits each RI corresponding to each downlink shared channel (or each TRP, each DMRS port group, each TCI, each QCL, each CW, or each TB).

The transmitting/receiving section 220 may receive information related to the RI corresponding to each transmission/reception point (for example, information related to the maximum number of RIs) by using at least one of higher layer signaling and MAC control information.

The control section 210 may perform control to report each rank indicator corresponding to each downlink shared channel (or each TRP, each DMRS port group, each TCI, each QCL, each CW, or each TB). The control section 210 may perform control so that the number of rank indicators to be reported is equal to or less than a given value.

The control section 210 may assume that, for a given transmission/reception point, transmission of the downlink shared channel using the number of layers larger than the number of rank indicators reported regarding the given transmission/reception point is not performed. The control section 210 may control generation and reporting of the RI, based on the information related to the maximum number of rank indicators corresponding to each transmission/reception point configured from the base station.

The control section 210 may control to discard a part of the downlink shared channel, based on a given condition, when a total number of layers used for transmission of each downlink shared channel is larger than a given value.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

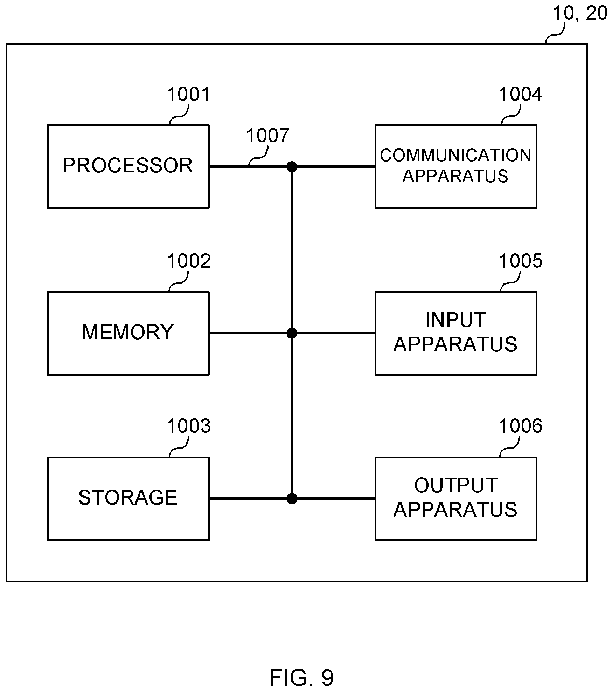

For example, a base station, a user terminal, and so on according to one embodiment of the present disclosure may function as a computer that executes the processes of the radio communication method of the present disclosure. FIG. 9 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a receiving section that receives downlink shared channels transmitted from a plurality of transmission/reception points; and
a control section that performs control to report rank indicators corresponding to the downlink shared channels or the transmission/reception points.

2. The user terminal according to claim 1, wherein
the control section performs control so that a sum of the rank indicators to be reported is equal to or less than a given value.

3. The user terminal according to claim 1 or 2, wherein
the control section assumes that, for a given transmission/reception point, transmission of a downlink shared channel using the number of layers larger than the number of the rank indicators reported regarding the given transmission/reception point is not performed.

4. The user terminal according to any one of claims 1 to 3, wherein
the receiving section receives information related to a maximum number of the rank indicators to reporting for each of the plurality of transmission/reception points.

5. The user terminal according to claim 1, wherein
the control section discards a part of the downlink shared channel, based on a given condition, when a total number of layers used for transmission of each of the downlink shared channels is larger than a given value.

6. A radio communication method comprising:
receiving downlink shared channels transmitted from a plurality of transmission/reception points; and
performing control to report rank indicators corresponding to the downlink shared channels or the transmission/reception points.
